# EUROPÄISCHE PATENTSCHRIFT

(11) **EP 1 439 123 B1**
(45) Veröffentlichungstag und Bekanntmachung des Hinweises auf die Patenterteilung: **01.07.2009**
(21) Anmeldenummer: 04000735.3
(22) Anmeldetag: 15.01.2004
(51) Int. Cl.: B64D 13/06, F28F 27/02, F28D 1/04

(54) **Klimatisierungssystem und Verfahren zum Betrieb**
Environmental control system and method of operation
Système de climatisation et son procédé de fonctionnement

(30) Priorität: 16.01.2003 DE 10301465
(43) Veröffentlichungstag der Anmeldung: 21.07.2004
(73) Patentinhaber: Liebherr-Aerospace Lindenberg GmbH, 88161 Lindenberg/Allgäu (DE)
(72) Erfinder: Brutscher, Norbert, 88161 Lindenberg (DE); Haas, Joachim, 88239 Wangen (DE)
(74) Vertreter: Herrmann, Uwe

(56) Entgegenhaltungen:
- EP-A- 0 337 830
- EP-B- 0 891 279
- WO-A1-96/20109
- GB-A- 1 083 574
- US-A- 4 735 056
- US-A1- 2002 113 167
- PATENT ABSTRACTS OF JAPAN Bd. 2000, Nr. 01, 31. Januar 2000 (2000-01-31) & JP 11 268694 A (SHIMADZU CORP), 5. Oktober 1999 (1999-10-05)
- SHERBOURNE R B: "A FOURTH AIR CONDITIONING GROUP" AIRCRAFT ENGINEERING, BUNHILL PUBLICATIONS LTD. LONDON, GB, Bd. 45, Nr. 4, April 1973 (1973-04), Seiten 22-26, XP002034081
- ANONYMOUS: "Integral radiator with multiple circuits" RESEARCH DISCLOSURE, KENNETH MASON PUBLICATIONS, HAMPSHIRE, GB, Bd. 367, Nr. 9, November 1994 (1994-11), XP007120047 ISSN: 0374-4353

## Beschreibung

Die vorliegende Erfindung betrifft ein Klimatisierungssystem, insbesondere zur Klimatisierung einer Flugzeugkabine, mit den Merkmalen des Oberbegriffs des Anspruchs 1, sowie ein Verfahren zum Betrieb eines Klimatisierungssystems, insbesondere zur Klimatisierung einer Flugzeugkabine.

Ein Klimatisierungssystem der vorgenannten Art wird zum Beheizen/Kühlen der Kabine, zur Frischluftversorgung der Passagiere und Besatzung sowie zur optimalen Kabinenbedruckung eingesetzt.

Um die vorgenannten Funktionen nicht nur im Normalbetrieb, sondern auch im Fehlerfall, d. h. bei teilweisem Ausfall der Anlage erfüllen zu können, sind Klimatisierungssysteme mit redundanter Ausführung bekannt. Dabei sind Baugröße und Gewicht insbesondere bei der Verwendung als Flugzeugklimatisierungssystem möglichst gering zu halten.

Zur Erfüllung dieser Funktionen sind die folgenden zwei Ausführungen einer Flugzeugklimaanlage bekannt:
a) Klimatisierungssystem mit mindestens zwei separat angeordneten Anlagen und ohne interne Redundanz. Hierbei wird die Redundanz durch die zweite Anlage erreicht.
b) Klimatisierungssystem mit mindestens einer Anlage und interner Redundanz. Hierbei wird die Redundanz durch die teilweise zweifach vorhandenen Komponenten erreicht.

Ein Klimatisierungssystem gemäß Variante a) ist aus Fig. 2 der JP-11-268694 welche als nächstliegende Stand der Technik betrachtet wird bekannt, wobei die beiden parallel angeordneten Klimaanlagen im Normalbetrieb von getrennten Zapfluftquellen mit Zapfluft versorgt werden. Dabei ist zwischen den beiden Zapfluftquellen eine Verbindungsleitung mit einem Ventil vorgesehen, so dass bei einem Ausfall einer der Klimaanlagen die verbleibende, nun mit stärkerer Leistung betriebene Klimaanlage von beiden Zapfluftquellen mit Zapfluft versorgt werden kann.

Die Druckschrift EP 0 337 830 A1 beschreibt ebenfalls ein Klimatisierungssystem mit zwei parallelen Klimaanlagen, die von zwei Triebwerken gemeinsam mit Zapfluft versorgt werden. Hierfür sind die Zapfluftleitungen der zwei Triebwerke über eine Verbindungsleitung verbunden, an welcher die Versorgungsleitungen für die Klimaanlagen angeordnet sind. Dabei ist eine Trennung der beiden Hälften des Zapfluftsystems durch ein in der Verbindungsleitung angeordnetes Absperrventil möglich. Um zu verhindern, dass während des Betriebs die Zapfluft im System durch Druckunterschiede in den Leitungen nur von einem der Triebwerke geliefert wird, ist jedem Triebwerk ein Drucksteuerventil zugeordnet ist, das den Druck der von diesem Triebwerk kommenden Zapfluft auf Grundlage des Durchsatzes durch das Ventil ansteuert. Weiterhin ist jedem Triebwerk ein Wärmetauscher zugeordnet.

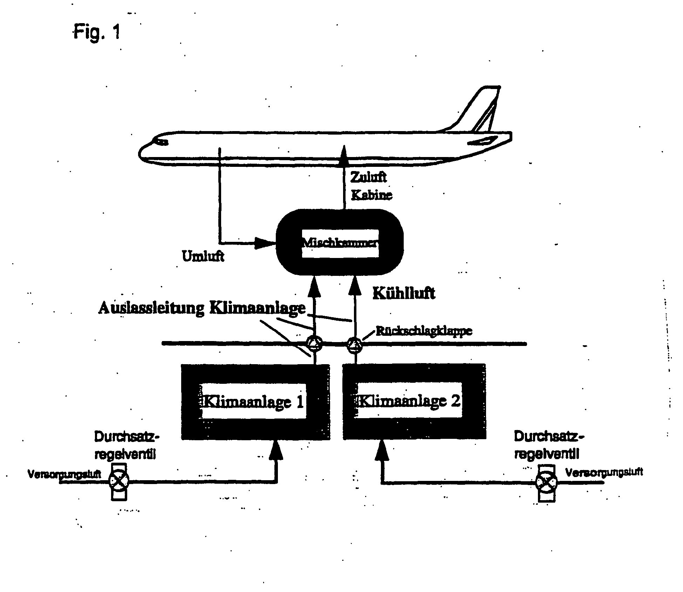

Fig. 1 zeigt ein Klimatisierungssystem gemäß Variante a). Hier werden mindestens zwei meist identische Klimaanlagen verwendet, um die erforderlichen Funktionen zu erfüllen. Dabei ist gewährleistet, dass auch bei einem Totalausfall einer Anlage die zweite Anlage die Mindestanforderungen noch erfüllt. Wie aus Fig. 1 hervorgeht, wird jede der Klimaanlagen einlassseitig mit Versorgungsluft beaufschlagt. Die entsprechende Versorgungsleitung ist jeweils mit einem Durchsatzregelventil versehen, mittels dessen der jeweilige druckluftseitige Durchsatz durch die Klimaanlage geregelt werden kann. Auslassseitig stehen die Klimaanlagen mit einer Mischkammer in Verbindung, in die des Weiteren Kabinenumluft eingeführt wird und die auslassseitig mit der Kabine in Verbindung steht und diese mit der entsprechend konditionierten Luft versorgt. Auslassseitig weisen die Klimaanlagen des Weiteren Rückschlagklappen auf, wie dies aus Fig. 1 ersichtlich ist.

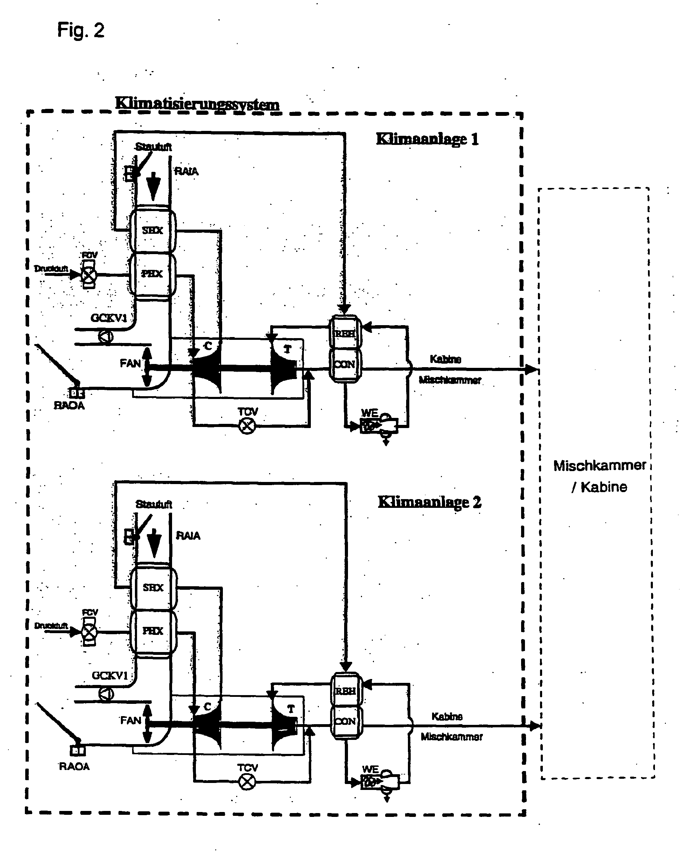

Die Funktion einer derartigen Klimaanlage ergibt sich aus Fig. 2. Jede der Klimaanlagen (Klimaanlage 1, Klimaanlage 2) ist ein Durchsatzregelventil FCV vorgeschaltet. Dieses Ventil dient zur Regelung des Druckluftdurchlasses der jeweiligen Klimaanlage und beinhaltet eine Durchsatzmesseinrichtung und eine pneumatisch/elektrisch betätigte Klappe zur stufenlosen Durchsatzregelung. Soll eine der Klimaanlagen abgeschaltet werden, wird das zugehörige Durchsatzregelventil FCV ganz geschlossen.

Dem Durchsatzregelventil FCV wird heiße Druckluft von den Triebwerken oder einem Hilfsaggregat zugeführt. Diese weist eine Temperatur von ca. 200 °C und einen Druck von etwa 3 bar auf. Diese Luft wird in dem druckluftseitig ersten Wärmetauscher (Vorwärmetauscher oder Primärwärmetauscher PHX) auf etwa 100°C vorgekühlt und anschließend in einem Kompressor C weiter verdichtet. Die Druckluft strömt sodann zur weiteren Abkühlung in den druckluftseitig zweiten Wärmetauscher (Hauptwärmetauscher oder Sekundärwärmetauscher SHX) und wird hier auf ca. 40 °C abgekühlt. Anschließend erfolgt die Entfeuchtung in einem Wasserabscheidesystem. Dieses besteht aus den Komponenten Reheater REH, Kondensor CON und Wasserabscheider WE.

Die auf diese Weise entfeuchtete Luft wird in der Turbine T entspannt und dabei bis auf ca. -30°C abgekühlt. Die an der Turbine dabei anfallende Wellenleistung wird zum Antrieb des Kompressors C und eines Gebläses FAN verwendet, das in dem Stauluftkanal angeordnet ist und zur Förderung von PHX/SHX-Stauluft bzw. Umgebungsluft dient. Vom Turbinenauslass strömt die Luft sodann durch die kalte Seite des Kondensors CON und anschließend in die Mischkammer bzw. in die Kabine.

Der genannte Vorgang vollzieht sich im Normalbetrieb in der Klimaanlage 1 sowie in der Klimaanlage 2 gemäß Fig. 2.

Zum Zwecke der Regelung der Temperatur bzw. der Kühlleistung der Anlage ist jeweils ein Ventil TCV vorgesehen, dass einen variablen Bypass vom Kompressor C, Hauptwärmetauscher SHX und Turbine T ermöglicht. Darüber hinaus kann die Stauluftmenge mittels Klappen am Stauluftkanal Ein- und/oder Auslass (RAIA und RAOA) variiert werden.

Im Stauluftkanal befindet sich neben dem Gebläse FAN auch der Gebläsebypass mit einer Rückschlagklappe GCKV 1, wodurch die Durchlässigkeit des Stauluftkanals im Flug erhöht wird.

Fällt eine im vorliegenden Beispiel aus Gebläse FAN, Kompressor C und Turbine T bestehende Welleneinrichtung ACM aus, kann der Strang dieser teilweise defekten Anlage im Flug weiterhin für die Druckluftförderung, allerdings mit reduzierter Kühlleistung benutzt werden, wodurch die zweite noch intakte Anlage bezüglich Durchsatz und Kühlleistung unterstützt wird. Die Kühlung der Druckluft in der teilweise defekten Anlage erfolgt hierbei nur durch die Stauluftwärmetauscher PHX, SHX, ohne dass eine Entspannung in der ausgefallenen Turbine T stattfinden kann.

Zu einem vollständigen Ausfall einer Klimaanlage kommt es, wenn beispielsweise eine Leitung bricht, beispielsweise die Leitung vom Durchsatzregelventil FCV zu dem Vorwärmetauscher PHX oder wenn ein Durchsatzregelventil FCV fehlerhaft schließt. In diesem Fall bleibt die Druckluftversorgung der entsprechenden Klimaanlage aus, wodurch diese vollständig ausfällt. Um hierbei den geforderten Mindestluftdurchsatz zu erfüllen, muss die verbleibende Anlage ca. 30 % mehr Durchsatz fördern.

Damit ergibt sich, dass die größten Leistungseinbußen im Flug für das Klimatisierungssystem gemäß Fig. 2 somit dann entstehen, wenn ein Durchsatzregelventil fehlerhaft schließt oder es zu einem Leitungsbruch kommt. Beides ist mit dem Ausfall einer der Klimaanlagen verbunden. Demgegenüber bedeutet der Ausfall einer Welleneinrichtung nur eine Leistungsreduzierung der jeweiligen Klimaanlage, da PHX und SHX dieser Anlage zur Kühlung weiterhin zur Verfügung stehen.

Aufgrund des relativ komplexen Aufbaus des Durchsatzregelventils FCV ist ein fehlerhaftes Schließen dieses Ventils wesentlich wahrscheinlicher als ein Leitungsbruch oder ein Wärmetauscherbruch. Eine deutliche Leistungseinbuße des Klimatisierungssystems im Flug ergibt sich somit in erster Linie durch ein fehlerhaftes Schließen des Durchsatzregelventils FCV. Die Gründe hierfür können der Ausfall der Klappenmechanik, der Ausfall der Klappenbetätigung oder der Ausfall der Durchsatzmessung des Durchsatzregelventils sein.

Neben der beispielhaft beschriebenen und in Fig. 2 dargestellten Architektur mit einer 3-Rad-ACM pro Klimaanlage sind selbstverständlich auch andere Anlagenkonzepte möglich, wie beispielsweise eine 4-Rad-ACM pro Anlage oder zwei seriell angeordnete ACMs pro Anlage oder auch motorisierte ACM. Darüber hinaus sind unterschiedliche Entfeuchtungssysteme denkbar.

Die Ausführungsform der Welleneinrichtung und des Entfeuchtungssystems ändert jedoch nichts an dem grundsätzlichen Sachverhalt, dass mindestens zwei separat angeordnete Klimaanlagen zur Erfüllung der Redundanzanforderungen eingesetzt werden.

Neben Klimatisierungssystemen mir zwei separat angeordneten Klimaanlagen sind ebenfalls Klimatisierungssysteme gemäß Variante b) bekannt, die eine Anlage mit interner Redundanz aufweisen. Hier wird die Redundanz dadurch erreicht, dass Komponenten der Anlage teilweise zweifach vorhanden sind.

Dabei sind Komponenten mit relativ großer Ausfallwahrscheinlichkeit und signifikant negativen Systemauswirkungen wie die Welleneinrichtung ACM und das Durchsatzregelventil FCV doppelt vorhanden. Ein Klimatisierungssystem mit teilweise mehrfach vorhandenen Komponenten ist aus der EP 0 891 279 B1 bekannt.

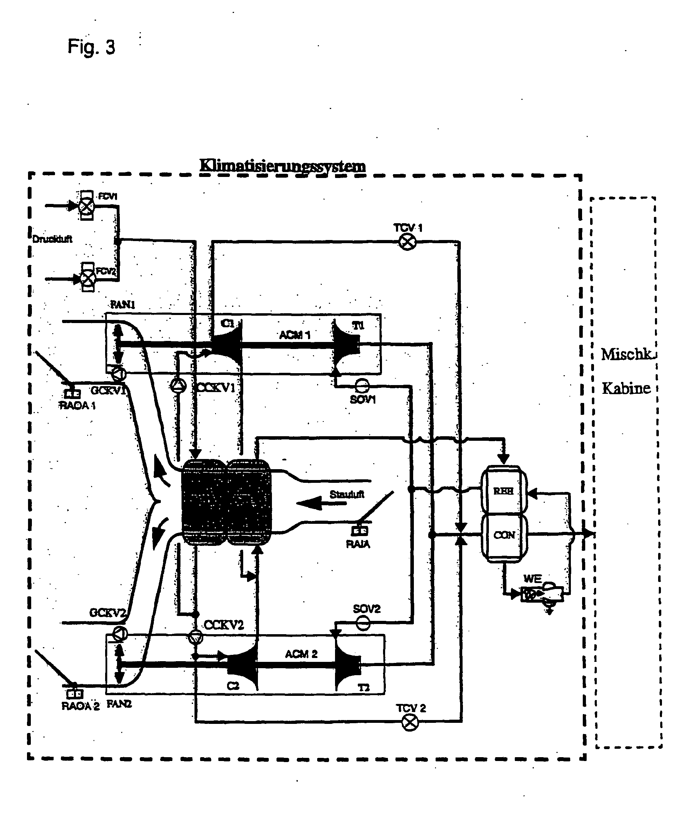

Fig. 3 zeigt ein Klimatisierungssystem mit doppelt vorhandener Welleneinrichtung ACM1, ACM2 sowie mir zweifach vorgesehenem Durchsatzregelventil FCV1, FCV2.

Die Stauluftwärmetauscher PHX, SHX sowie das Wasserabscheidesystem bestehend aus den Komponenten REH, CON, WE sind dagegen nur einfach vorhanden.

Dadurch ergibt sich eine relativ kompakte Bauweise und somit ein geringer Bauraumbedarf verglichen mit der in Fig. 2 dargestellten Systemarchitektur.

Der prinzipielle Kühlprozess selbst ist identisch zu dem zu Fig. 2 beschriebenen Prozess.

Im Normalbetrieb werden die aus Redundanzgründen zweifach vorgesehenen Durchsatzregelventile FCV1, FCV2 mit heißer Druckluft (ca. 200 °C und 3 bar) von den Triebwerken oder einem Hilfsaggregat versorgt. Diese Ventile beinhalten eine Durchsatzmesseinrichtung und eine pneumatisch/elektrische Klappe zur stufenlosen Durchsatzregelung. Soll das Klimatisierungssystem abgeschaltet werden, werden beide Ventile FCV1, FCV2 ganz geschlossen.

Die FCV Auslassluft wird zusammengeführt und in dem gemeinsamen Stauluftwärmetauscher PHX auf etwa 100 °C vorgekühlt. Jeweils etwa die Hälfte der PHX Auslassluft wird im Kompressor C1 und im Kompressor C2 verdichtet und nach der Zusammenführung in einem Hauptwärmetauscher SHX durch die Stauluft auf ca. 40°C abgekühlt. Zur Kondensation und Wasserabschaltung wird die gekühlte Druckluft durch den Reheater REH, Kondensor CON und Wasserabscheider WE geleitet. Anschließend wird die Druckluft wieder aufgeteilt und jeweils etwa die Hälfte wird in Turbine T1 und in Turbine T2 entspannt und dabei bis auf ca. -30°C abgekühlt. Nach der Zusammenführung strömt diese Luft durch die kalte Seite des Kondensors CON und schließlich mittels einer gemeinsamen Leitung in die Mischkammer des Flugzeuges.

In der in Fig. 3 beispielhaft dargestellten Architektur besteht jede Welleneinrichtung ACM1, ACM2 aus drei Rädern, die durch eine Welle verbunden sind. Die Turbinenwellenleistung wird zum Antrieb des Kompressors C1, C2 und des Gebläses FAN1, FAN2 verwendet. Die Gebläse FAN1, FAN2 sind parallel angeordnet, so dass jedes Gebläse am Boden ca. die Hälfte der Stauluft durch den gemeinsamen PHX und SHX fördert. Im Flug erfolgt hier die Strömung von PHX und SHX mit Stauluft hauptsächlich aufgrund des Staudrucks.

Die Stauluft wird dem Hauptwärmetauscher SHX und dem stauluftseitig nachgeschalteten Vorwärmetauscher PHX in einem Kanal zugeführt und nach dem PHX durch einen gemeinsamen Kanal von den zwei Gebläsen FAN1, FAN2 angesaugt. Diese Stauluft strömt dann über zwei getrennte Gebläse - Auslasskanäle an die Umgebung zurück.

Die Temperaturregelung der Kühlluft erfolgt in der Regel mittels zweier Ventile TCV1, TCV2 sowie den Stauluftkanalklappen RAIA, RAOA1 und RAOA2. Die Ventile TCV1 und TCV2 dienen zusätzlich dazu, einen synchronen Betrieb der zwei Welleneinrichtungen zu gewährleisten.

Ein typischer Fehlerfall bei der in Fig. 3 dargestellten Architektur des Klimatisierungssystems ist der Ausfall einer Welleneinrichtung ACM. Auch in diesem Fall müssen bestimmte Mindestanforderungen bezüglich Luftmenge und Kühlleistung gewährleistet sein. Um diese Funktionen auch im Fehlerfall zu erfüllen, sind zwei zusätzliche Ventile SOV1, SOV2 am jeweiligen Turbineneinlass angeordnet, wie dies aus Fig. 3 ersichtlich ist. Darüber hinaus sind zwei zusätzliche Rückschlagventile CCKV1, CCKV2 am jeweiligen Kompressoreinlass der Kompressoren C1, C2 integriert.

Fällt z.B. die Welleneinrichtung ACM1 aus (festsitzende Welle), verhindert das Rückschlagventil CCKV1 eine nutzlose Kreisströmung der von dem in Betrieb befindlichen Kompressor C2 verdichteten Luft über den Kompressor C1 wieder zum Einlass des Kompressors C2. Das Ventil SOV1 wird geschlossen, damit die vom Kompressor C2 verdichtete Luft nicht nutzlos über die stehende Turbine T1 sondern ausschließlich über die funktionierende Turbine T2 der im Betrieb befindlichen ACM2 entspannt wird.

Aufgrund des Ausfalls einer ACM sollte die verbleibende intakte ACM nun die gesamte Luft fördern. Dies ist jedoch nicht möglich, da jede ACM aus Gewichts- und Baugrößegründen nur auf ca. 50 % der Gesamtluftmenge ausgelegt ist (Normalbetrieb) und nicht die doppelte Luftmenge bewältigen kann. Um die notwendige Durchlässigkeit zu erreichen, ist somit ein teilweiser Bypass der verbleibenden, funktionierenden ACM2 durch Öffnen des Ventils TCV2 bzw. eine überdimensionierte Anlage (bezogen auf den Normalbetrieb) erforderlich.

Im Bodenbetrieb (kein Staudruck) und bei ausgefallener Welleneinrichtung (z. B. ACM1) muss die zugehörige Stauluftkanalauslassklappe RAOA1 geschlossen werden, da ansonsten das funktionierende Gebläse FAN2 die Luft vom gegenüberliegenden Auslasskanal ansaugen würde und nicht durch die Stauluftwärmetauscher PHX, SHX. Deshalb erfordert diese Systemarchitektur mindestens zwei kontrollierbare Stauluftauslassklappen, wie dies in Fig. 3 wiedergegeben ist.

Neben dieser beispielhaft beschriebenen Architektur mit zwei 3-Rad-ACMs pro Anlage bzw. pro gemeinsam genutzter Wärmetauscher sind selbstverständlich auch andere Anlagenkonzepte möglich, wie beispielsweise zwei parallel angeordnete 4-Rad-ACMs pro Anlage oder mindestens zwei seriell angeordnete ACMs pro Anlage oder motorisierte ACM oder auch unterschiedliche Entfeuchtungssysteme. Die Ausführung und Anordnung der ACMs ist beliebig, d. h. außer den exemplarisch genannten 3- und 4-Rad-Maschinen und deren Anordnung sind beliebige andere Varianten denkbar.

Die Ausführungsform der Welleneinrichtung und des Entfeuchtungssystems ändert jedoch nichts an dem grundsätzlichen Sachverhalt, dass mindestens zwei Welleneinrichtungen pro Anlage und pro gemeinsam benutzter Wärmetauscher zur Erfüllung der Redundanzanforderungen eingesetzt werden.

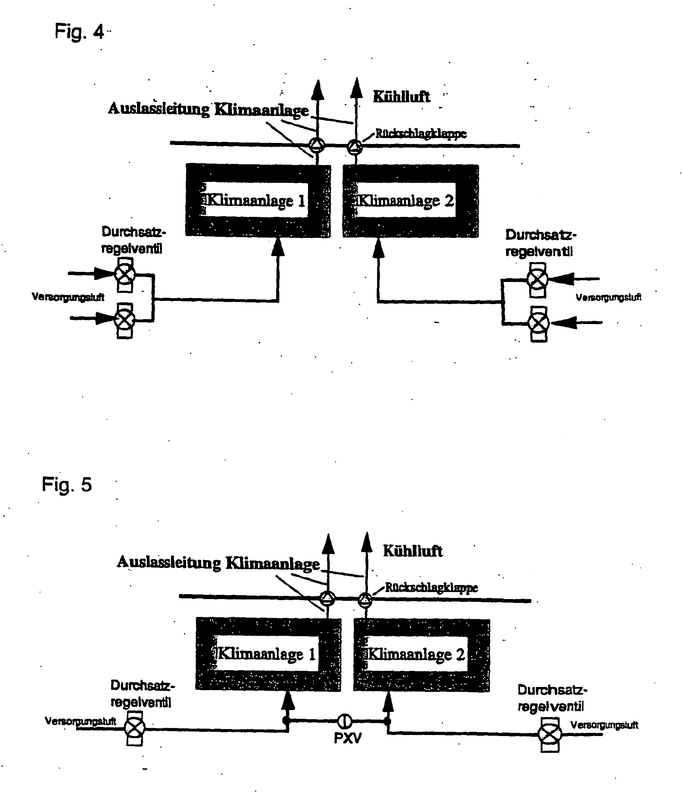

Die oben beschriebenen Ausführungen eines Klimatisierungssystems gemäß Fig. 1, Fig. 2 bzw. Fig. 3 sind mit dem im folgenden angeführten Nachteilen verbunden:
1. Zwei identische und separat angeordnete Anlagen gemäß Fig. 1, Fig. 2:
   Der Ausfall eines Durchsatzregelventils FCV führt zum Ausfall einer Klimaanlage. Um auch in diesem Fehlerfall die geforderte Kühlleistung und den geforderten Luftdurchsatz zu erbringen, muss die Anlage auf diesen Fall ausgelegt werden. Dies bedeutet, dass unter Normalbedingungen, wenn beide Anlagen in Betrieb sind, das Klimatisierungssystem überdimensioniert ist. Die Auslegung auf diesen Fehlerfall (nur eine Anlage funktionstüchtig) erfordert größere Wärmetauscher PHX/SHX und Stauluftkanal sowie Leitungsquerschnitte. Damit gehen entsprechende Nachteile bezüglich Baugröße und Gewicht der Klimaanlage einher.
   Der Ausfall der Versorgungsluft aufgrund eines Ausfalls eines Durchsatzregelventils kann zwar durch den Einbau von zwei parallel angeordneten Durchsatzregelventilen und Durchsatzmesseinrichtungen pro Klimaanlage weitgehend vermieden werden, da die Wahrscheinlichkeit des Ausfalls der Versorgungsluft durch fehlerhaftes Schließen von beiden Durchsatzregelventilen sehr gering ist. Ein derartiges System ergibt sich aus Fig. 4. Gleichzeitig verdoppelt sich jedoch die Wahrscheinlichkeit, dass zumindest ein Durchsatzregelventil fehlerhaft offensteht. Dies kann zu sehr hohem, unkontrolliertem Durchsatz und damit extremen Druck- und Temperaturanforderungen in der Klimaanlage führen. Diese hohen Festigkeitsanforderungen können ebenfalls zum Abschalten der entsprechenden Anlage führen, um Beschädigungen durch Überlastung (z. B. Leitungsbruch) zu vermeiden.
   Die Verwendung von zwei Durchsatzregelventilen pro Anlage ist weiterhin nachteilig, weil dadurch die Kosten und das Gewicht des Klimatisierungssystems deutlich zunehmen, während die Systemzuverlässigkeit reduziert wird, was auf eine höhere Komponentenanzahl zurückzuführen ist.
2. Einfach vorhandene Anlage mit teilweise zweifach vorhandenen Komponenten gemäß Fig. 3.
   Verglichen mit der Ausführung gemäß Fig. 1, Fig. 2 sind als zusätzliche Komponenten zwei Ventile SOV1 und SOV2 sowie zwei Rückschlagklappen CCKV1, CCKV2 erforderlich.
   Darüber hinaus verlangt die Gewährleistung eines synchronen Betriebs der zwei Wellen-Einrichtungen ACM1, ACM2 einen zusätzlichen Kontroll- und Regelaufwand. Bei Ausfall einer Welleneinrichtung ist ein schnelles Betätigen der Ventile (z. B. SOV) notwendig, um einen korrekten Betrieb und die Erfüllung der Funktionen Bedruckung, Belüftung und Kühlung sicherzustellen. Als weiterer Nachteil ergibt sich, dass bestimmte Komponenten nur einfach vorhanden sind, wie z. B. die Leitung vom FCV1 und FCV2 zum PHX, Wärmetauscher, Leitung vom Klimatisierungssystem zur Mischkammer. Ein Ausfall nur einer dieser Komponenten, beispielsweise ein Leitungsbruch, führt zum Totalausfall des gesamten Klimatisierungssystems. Im Gegensatz dazu führt bei zwei oder mehr separat angeordneten Klimaanlagen beispielsweise ein Leitungsbruch lediglich zum Ausfall einer der Klimaanlagen, also z. B. zum Ausfall einer von zwei Klimaanlagen.
   Fällt eine Welleneinrichtung aus, ist die Kühlleistung und Durchlässigkeit des Systems im Vergleich zur Ausführung gemäß Fig. 2 deutlich geringer:
   Fällt z. B. die ACM 1 gemäß Fig. 3 aus (festsitzende Welle), dann verhindert das Rückschlagventil CCKV1, dass die verdichtete Luft vom im Betrieb befindlichen Kompressor C2 über den Kompressor C1 wieder zum Einlass des Kompressors C2 zurückströmt (nutzlose Kreisströmung). Wie oben erläutert, wird das SOV1 geschlossen, damit die vom Kompressor C2 verdichtete Luft nicht nutzlos über die stehende Turbine T1 sondern ausschließlich über die funktionierende Turbine T2 entspannt wird. Aufgrund des Ausfalls einer ACM sollte die verbleibende ACM nun die gesamte Luft fördern. Wie oben erläutert, ist dies jedoch nicht möglich, da jede ACM und die entsprechenden Leitungsquerschnitte nur auf ca. 50 % der Gesamtluftmenge ausgelegt sind (Normalbetrieb) und nicht die doppelte Luftmenge bewältigen können. Dadurch wird die Durchlässigkeit und Kühlleistung der Anlage im Fehlerfall stark reduziert, weil eine zumindest teilweise Umgehung der ACM und des Hauptwärmetauschers SHX notwendig ist (TCV weiter offen).

Auch durch eine Überdimensionierung der ACMs, d. h. die Auslegung erfolgt z. B. auf 70 % anstatt 50 % des Gesamtdurchsatzes, lässt sich dieser Nachteil nur unzureichend kompensieren, weil sich dadurch der Bauraumbedarf und das Gewicht sowie die Kosten der ACMs erhöht. Dabei ist zu berücksichtigen, dass das Gewicht einer Komponente im wesentlichen eine Funktion des Durchsatzes darstellt.

Während bei einer Ausführung mit zwei separat angeordneten Klimaanlagen ein Ausfall des Durchsatzregelventils zu einer signifikanten Leistungsreduzierung des Klimatisierungssystems führt, führt bei einer Ausführung mit einer Anlage und teilweise doppelt vorhandenen Komponenten der Ausfall der Welleneinrichtung oder der zusätzlichen Ventile SOV1 bzw. SOV2 zu deutlichen Leistungseinbußen.

Es ist daher die Aufgabe der vorliegenden Erfindung ein Klimatisierungssystem sowie ein Verfahren zum Betrieb eines Klimatisierung zur Verfügung zu stellen, bei dem bei Auftreten eines Einfachfehlers, wie z. B. beim Ausfall eines Durchsatzregelventils, einer Welleneinrichtung oder bei einem Leitungsbruch keine oder nur geringe Leistungseinbußen auftreten und bei dem sich geringe Kosten und Gewicht ergeben.

Diese Aufgabe wird durch ein Klimatisierungssystem gemäß Anspruch 1 und ein Verfahren gemäß Anspruch 13 gelöst.

Bei dem erfindungsgemäßen Klimatisierungssystem handelt es sich dabei um die Ausführungsvariante mit wenigstens zwei Klimaanlagen, wobei stromabwärts der Durchsatzregelventile wenigstens eine Verbindungsleitung vorgesehen ist, die die einlassseitigen Versorgungsleitungen oder die Klimaanlagen druckluftseitig miteinander verbindet und die mit einem Ventil versehen ist, mittels dessen in Abhängigkeit von der Ventilstellung die Verbindungsleitung geöffnet oder abgesperrt werden kann, wobei die Verbindungsleitung stromabwärts der Durchsatzregelventile und stromaufwärts der druckluftseitig ersten Wärmetauscher der Klimaanlagen angeordnet ist.

Das erfindungsgemäße Klimatisierungssystem weist den Vorteil auf, dass auch bei einem fehlerhaft geschlossenen Durchsatzregelventil (Ausfall der Klappenmechanik, des Klappenantriebs oder der Durchsatzmesseinrichtung) eine hohe Kühlleistung und Durchlässigkeit erreicht werden kann. In diesem Fall kann das erfindungsgemäße Ventil der Verbindungsleitung geöffnet werden, was zur Folge hat, dass beide Klimaanlagen durch ein FCV versorgt werden. Damit können trotz Ausfall eines Durchsatzregelventils, das fehlerhaft geschlossen ist, weiterhin beide Klimaanlagen für die Luftförderung und Luftkühlung benutzt werden, woraus sich die volle Kühlleistung ergibt.

Als weiterer Vorteil ergibt sich, dass aufgrund des Vorhandenseins zweier Klimaanlagen eine hohe Redundanz erreicht wird. Dabei ist es besonders vorteilhaft, wenn alle Komponenten zweifach vorhanden sind. In diesem Fall führt ein Leitungsbruch nicht zum Totalausfall des Klimatisierungssystems.

Für den Fall, dass ein Durchsatzregelventil fehlerhaft offensteht, können sehr hohe Durchsätze und damit Druck- und Temperaturanforderungen in der Klimaanlage auftreten. Damit diese Festigkeitsanforderungen bis zu einem bestimmten Limit aufgenommen werden können müssen die Komponenten entsprechend stärker dimensioniert werden. Diese Anforderungen können durch die erfindungsgemäße Verbindungsleitung mit Ventil reduziert werden. Dazu wird das Ventil geöffnet und das verbleibende, noch funktionstüchtige Durchsatzregelventil wird teilweise oder ganz geschlossen. Auf diese Weise kann erreicht werden, dass sich der hohe Durchsatz des fehlerhaft offenen Durchsatzregelventils auf beide Klimaanlagen verteilt, wodurch sich Druck- und Temperaturanforderungen reduzieren, was in entsprechenden Gewichtsvorteilen resultiert.

Es kann vorgesehen sein, dass das Ventil der Verbindungsleitung nur beim Systemstart (Funktionsprüfung) und im Fehlerfall eines Durchsatzregelventils betätigt wird. Verglichen mit einem Durchsatzregelventil ergibt sich dadurch eine sehr geringe Betriebszeit (Betätigungszyklen) und damit eine sehr hohe Ventilzuverlässigkeit.

Ein weiterer Vorteil der erfindungsgemäßen Anordnung ergibt sich daraus, dass Ausfälle des Ventils der Verbindungsleitung sehr fehlertolerant sind. Ein Ausfall des Ventils in geöffneter Position führt im Normalbetrieb oder bei Ausfall eines Durchsatzregelventils zu keiner Leistungsreduzierung des Klimatisierungssystems.

Nur bei dem unwahrscheinlichen, gleichzeitigen Ausfall eines Durchsatzregelventils und des erfindungsgemäßen Ventils in geschlossener Position ergibt sich eine Leistungsreduzierung, da dann nur eine von zwei Klimaanlagen durchströmt wird. In diesem Fall ist die verbleibende funktionstüchtige Anlage jedoch immer noch ausreichend, um die Mindestanforderungen zu erfüllen.

In weiterer Ausgestaltung der vorliegenden Erfindung ist vorgesehen, dass das Ventil als Auf-/Zuventil ausgeführt ist. Dabei kann ein einfaches Auf-/Zuventil mit geringen Dichtigkeitsanforderungen vorgesehen sein. Aus diesem Grund ist die Zuverlässigkeit dieses Ventils relativ hoch verglichen mit dem komplexen Durchsatzregelventil. Für den Ausfall einer Klimaanlage ist der gleichzeitige Ausfall eines Durchsatzregelventils und des relativ zuverlässigen Ventils der Verbindungsleitung notwendig (Doppelfehler). Damit ist die Wahrscheinlichkeit für den Totalausfall einer Klimaanlage sehr gering. Somit ist dieser Zustand nicht mehr relevant für die Systemauslegung. Die Auslegung der Anlage kann somit auf deutlich geringere Anforderungen erfolgen (z. B. Klimaanlage 1 mit voller Funktion und Klimaanlage 2 mit ausgefallener Welleneinrichtung). Dies führt zu einer deutlichen Reduzierung von Bauvolumen und Gewicht des Klimatisierungssystems, was insbesondere bei der Verwendung in Flugzeugen von erheblichem Vorteil ist.

Ein weiterer Vorteil ergibt sich daraus, dass der Einsatz eines einfachen Ventils in die Verbindungsleitung wesentlich kostengünstiger und zuverlässiger ist als die Verwendung von zwei zusätzlichen, komplexen Durchsatzregelventilen, wie dies in Fig. 4 dargestellt ist.

In weiterer Ausgestaltung der Erfindung ist vorgesehen, dass das Ventil als Regelventil ausgeführt ist.

Weiterhin kann vorgesehen sein, dass das Ventil und wenigstens teilweise die zu dem Ventil führende Verbindungsleitung bautechnisch in die druckluftseitig ersten Wärmetauscher der Klimaanlage integriert sind. Damit ergibt sich eine besonders kompakte Bauweise, die sämtliche Funktionen des erfindungsgemäßen Klimatisierungssystems erfüllt.

Eine besonders günstige Betriebsweise ergibt sich dadurch, dass das Ventil im Normalbetrieb des Klimatisierungssystems geschlossen und bei Ausfall eines Durchsatzregelventils geöffnet ist.

Die Klimaanlagen können derart ausgeführt sein, dass sie mit Luft oder einem anderen Medium durchströmbar sind.

Jede der Klimaanlagen kann eine oder mehrere parallel oder seriell angeordnete Welleneinrichtungen aufweisen. Die Welleneinrichtungen der Klimaanlagen können als 3-Rad-Maschinen oder 4-Rad-Maschinen ausgeführt sein. Hinsichtlich der Ausführung oder Anordnung der Welleneinrichtungen bestehen keinerlei Beschränkungen.

Sie können beispielsweise als motorisierte Welleneinrichtungen ausgeführt sein.

In weiterer Ausgestaltung der Erfindung ist vorgesehen, dass jede der Klimaanlagen einen druckluftseitig ersten Wärmetauscher, dem ein Kompressor nachgeschaltet ist, sowie einen druckluftseitig zweiten Wärmetauscher aufweist, der dem Kompressor nachgeschaltet ist.

Dabei kann jede der Klimaanlagen ein Entfeuchtungssystem aufweisen, das druckluftseitig dem zweiten Wärmetauscher nachgeschaltet und einer Turbine vorgeschaltet ist.

Das Entfeuchtungssystem besteht vorzugsweise aus den Komponenten Reheater, Kondensor und Wasserabscheider.

Die Anordnung und Ausführung des Wasserabscheidesystems kann auch in beliebigen anderen Varianten ausgeführt sein, so dass die genannten Komponenten sowie deren Anordnung nur beispielhafte Ausgestaltungen betreffen.

Hinsichtlich der stauluftseitigen Anordnung der Wärmetauscher besteht eine vorteilhafte Ausführungsform darin, dass der druckluftseitig erste Wärmetauscher stauluftseitig dem druckluftseitig zweiten Wärmetauscher nachgeschaltet ist. Auch hierbei sind beliebige andere Anordnungsmöglichkeiten denkbar.

Weitere Vorteile und Einzelheiten der vorliegenden Erfindung werden anhand der Zeichnungen näher erläutert. Es zeigen:
Fig. 1: Schematische Darstellung eines Klimatisierungssystems mit zwei Klimaanlagen,
Fig. 2: Klimatisierungssystem mit zwei identischen und separat angeordneten Klimaanlagen,
Fig. 3: Klimatisierungssystem mit einer Klimaanlage und teilweise doppelt vorhandenen Komponenten,
Fig. 4: Klimatisierungssystem mit zwei Durchsatzregelventilen pro Klimaanlage,
Fig. 5: Schematische Darstellung eines Klimatisierungssystems gemäß der vorliegenden Erfindung mit die Versorgungsleitungen verbindender Verbindungsleitung mit Absperrventil,
Fig. 6: Schematische Darstellung der Integration des erfindungsgemäßen Ventils mit Verbindungsleitung in die druckluftseitig ersten Wärmetauscher und
Fig. 7: Schematische Darstellung eines Klimatisierungssystems gemäß der vorliegenden Erfindung mit fehlerhaft geschlossenem Durchsatzregelventil.

Fig. 5 zeigt das erfindungsgemäße Klimatisierungssystem mit einer Klimaanlage 1 und einer Klimaanlage 2. Beide Klimaanlagen sind separat angeordnet und vorzugsweise identisch ausgeführt, so dass alle Komponenten zweifach vorhanden sind. Ein Leitungsbruch führt somit nicht zum Totalausfall des Klimatisierungssystems.

Gegenüber dem in Fig. 3 dargestellten System ergibt sich der Vorteil, dass der Ausfall einer Welleneinrichtung nur zu einer relativ geringen Reduzierung von Durchlässigkeit und Kühlleistung führt.

Einlassseitig werden die Klimaanlagen mit Druckluft versorgt, die in Fig. 5 mit der Bezeichnung "Versorgungsluft" dargestellt ist. In den entsprechenden Versorgungsleitungen befindet sich jeweils ein Durchsatzregelventil zum Zwecke der Regelung des Durchsatzes der jeweiligen Klimaanlage. Die entsprechenden Versorgungsleitungen sind wie in Fig. 5 dargestellt stromabwärts der Durchsatzregelventile mittels einer Verbindungsleitung verbunden. Diese weist das Ventil PXV auf, das in dem in Fig. 5 gezeigten Normalbetrieb geschlossen ist. In diesem versorgt jedes Durchsatzregelventil die entsprechende Klimaanlage mit dem gewünschten Druckluftdurchsatz. Eine einlassseitige Verbindung auf der Druckluftseite beider Klimaanlagen wird gemäß diesem Ausführungsbeispiel durch das im Normalbetrieb geschlossene Ventil PXV verhindert. Die Funktion und Architektur des Klimatisierungssystems entspricht ansonsten in bevorzugter Ausgestaltung der vorliegenden Erfindung der zu Fig. 2 dargestellten Funktion und dem zu Fig. 2 beschriebenen Systemaufbau des Klimatisierungssystems.

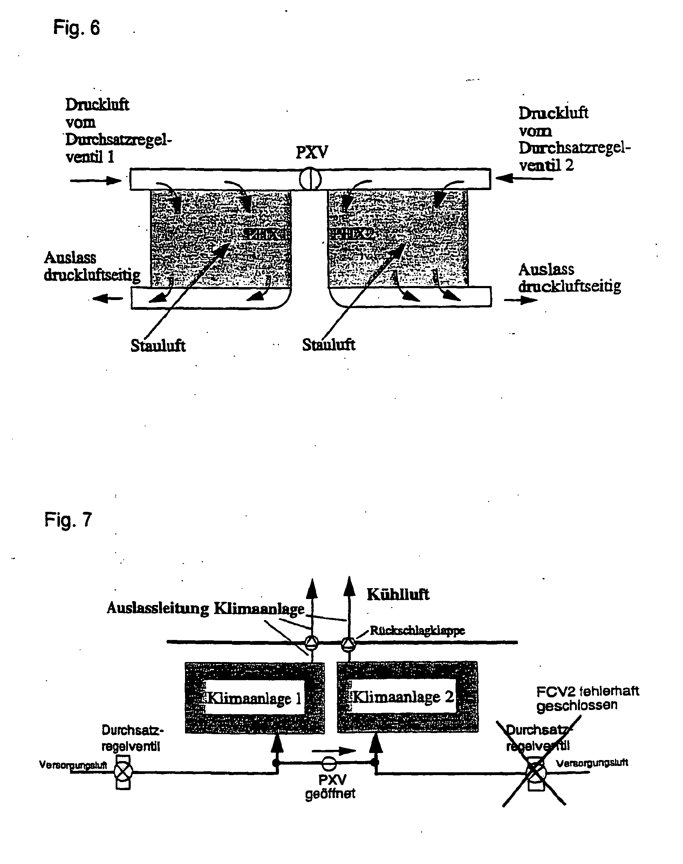

In bevorzugter Ausgestaltung der vorliegenden Erfindung kann vorgesehen sein, dass das Ventil PXV und die Verbindungsleitung zumindest teilweise in die druckluftseitig ersten Wärmetauscher PHX1, PHX2 integriert sind, wie dies in Fig. 6 dargestellt ist. Auf diese Weise ergibt sich bautechnisch eine Einheit, die entsprechend kompakt gebaut ist und damit besonders wenig Platz beansprucht. Die Vorwärmetauscher PHX1, PHX2 werden bei geöffneten Durchsatzregelventilen 1 und 2 mit Druckluft beaufschlagt und weisen jeweils einen Auslass auf, mittels dessen die Druckluft nach passieren des Vorwärmetauschers in den jeweiligen Kompressor einströmt. Zur Kühlung der Druckluft werden die Vorwärmetauscher PHX1, PHX2 mit Stauluft durchströmt.

Fig. 7 zeigt das Klimatisierungssystem gemäß Fig. 5 mit fehlerhaft geschlossenem Durchsatzregelventil FCV2. In diesem Fall wird die gesamte Druckluftversorgung von dem links dargestellten Durchsatzregelventil übernommen. Das erfindungsgemäße Ventil PXV wird geöffnet, so dass beide Klimaanlagen, d. h. auch die Klimaanlage 2 gemäß Fig. 7 mit Druckluft versorgt wird und somit auch für die Luftförderung und Luftkühlung in vollem Umfang benutzt werden kann. Der Ausfall des Durchsatzregelventils FCV2 macht sich hinsichtlich der Kühlleistung des Klimatisierungssystems somit nicht negativ bemerkbar.

Für den in Fig. 7 nicht dargestellten Fall, dass ein Durchsatzregelventil fehlerhaft offensteht, kann das erfindungsgemäße Ventil ebenfalls vorteilhaft eingesetzt werden. In diesem Fall kann vorgesehen sein, dass das verbleibende, noch funktionstüchtige Durchsatzregelventil teilweise oder ganz geschlossen wird, so dass die Druckluftzufuhr ausschließlich durch das fehlerhaft offenstehende Durchsatzregelventil erfolgt. Das erfindungsgemäße Ventil PXV wird geöffnet, wodurch sich ähnlich wie in Fig. 7 dargestellt, der hohe Durchsatz des fehlerhaft offenen Durchsatzregelventils auf beide Klimaanlagen verteilt. Dadurch reduzieren sich Druck- und Temperaturanforderungen entsprechend, woraus sich Gewichtsvorteile ergeben.

Die vorliegende Erfindung ermöglicht es, ein Klimatisierungssystem zur Verfügung zu stellen, das bei hoher Redundanz keine oder nur geringste Leistungseinbußen aufweist. Dies wird erfindungsgemäß dadurch erreicht, dass stromabwärts der Durchsatzregelventile wenigstens eine Verbindungsleitung vorgesehen ist, die die einlassseitigen Versorgungsleitungen oder die Klimaanlagen druckluftseitig miteinander verbindet. Diese ist mit einem Absperrventil versehen, das vorzugsweise im Normalfall geschlossen und im Fehlerfall geöffnet ist. Besonders vorteilhaft ist es, wenn die Verbindungsleitung stromaufwärts der druckluftseitig ersten Wärmetauscher der Klimaanlage angeordnet ist.

Von der Erfindung ebenfalls umfasst sind Ausführungsformen, bei denen die Verbindungsleitung beispielsweise auch stromabwärts der druckluftseitigen ersten Wärmetauscher oder weiterer Komponenten der Klimaanlagen angeordnet ist. Eine Optimierung von Kosten und Gewicht bei maximaler Redundanz ist jedoch dann zu erreichen, wenn die Verbindungsleitung stromabwärts der Durchsatzregelventile und stromaufwärts der druckluftseitig ersten Wärmetauscher der Klimaanlagen angeordnet ist.

## Patentansprüche

1. Klimatisierungssystem, insbesondere zur Klimatisierung einer Flugzeugkabine, mit wenigstens zwei Klimaanlagen, die einlassseitig jeweils mit einer Versorgungsleitung und auslassseitig mit einer zu klimatisierenden Kabine oder einer Mischkammer in Verbindung stehen, wobei die einlassseitige Versorgungsleitung zum Zwecke der Durchsatzregelung jeweils wenigstens ein Durchsatzregelventil (FCV) aufweist und
wenigstens eine Verbindungsleitung vorgesehen ist, die die einlassseitigen Versorgungsleitungen oder die Klimaanlagen druckluftseitig miteinander verbindet und die mit einem Ventil (PXV) versehen ist, mittels dessen in Abhängigkeit von der Ventilstellung die Verbindungsleitung geöffnet oder abgesperrt werden kann **dadurch gekennzeichnet, dass** die Verbindungsleitung stromabwärts der Durchsatzregelventile (FCV) und stromaufwärts der druckluftseitig ersten Wärmetauscher (PHX) der Klimaanlagen angeordnet ist.

2. Klimatisierungssystem nach Anspruch 1, **dadurch gekennzeichnet, dass** das Ventil (PXV) als Auf-/Zu-Ventil ausgeführt ist.

3. Klimatisierungssystem nach Anspruch 1, **dadurch gekennzeichnet, dass** das Ventil (PXV) als Regelventil ausgeführt ist.

4. Klimatisierungssystem nach einem der vorhergehenden Ansprüche, **dadurch gekennzeichnet, dass** das Ventil (PXV) und wenigstens teilweise die zu dem Ventil (PXV) führende Verbindungsleitung bautechnisch in die druckluftseitig ersten Wärmetauscher (PHX) der Klimaanlagen integriert ist.

5. Klimatisierungssystem nach einem der vorhergehenden Ansprüche, **dadurch gekennzeichnet, dass** die Klimaanlagen derart ausgeführt sind, dass sie mit Luft oder einem anderen Medium durchströmbar sind.

6. Klimatisierungssystem nach einem der vorhergehenden Ansprüche, **dadurch gekennzeichnet, dass** jede der Klimaanlagen eine oder mehrere parallel oder seriell angeordnete Welleneinrichtungen (ACM) aufweist.

7. Klimatisierungssystem nach Anspruch 6, **dadurch gekennzeichnet, dass** die Welleneinrichtungen (ACM) beliebig ausgeführt sind, beispielsweise als 3-Rad-Maschinen oder 4-Rad-Maschinen.

8. Klimatisierungssystem nach Anspruch 6 oder 7, **dadurch gekennzeichnet, dass** die Welleneinrichtungen (ACM) als motorisierte Welleneinrichtungen ausgeführt sind.

9. Klimatisierungssystem nach einem der vorhergehenden Ansprüche, **dadurch gekennzeichnet, dass** jede der Klimaanlagen einen druckluftseitig ersten Wärmetauscher (PHX), dem ein Kompressor (C) nachgeschaltet ist, sowie einen druckluftseitig zweiten Wärmetauscher (SHX) aufweist, der dem Kompressor (C) nachgeschaltet ist.

10. Klimatisierungssystem nach Anspruch 9, **dadurch gekennzeichnet, dass** jede der Klimaanlagen ein Entfeuchtungssystem aufweist, das druckluftseitig dem zweiten Wärmetauscher (SHX) nachgeschaltet und einer Turbine (T) vorgeschaltet ist.

11. Klimatisierungssystem nach Anspruch 10, **dadurch gekennzeichnet, dass** das Entfeuchtungssystem aus den Komponenten Reheater (REH), Kondensor (CON) und Wasserabscheider (WE) besteht.

12. Klimatisierungssystem nach einem der Ansprüche 9 bis 11, **dadurch gekennzeichnet, dass** der druckluftseitig erste Wärmetauscher (PHX) stauluftseitig dem druckluftseitig zweiten Wärmetauscher (SHX) nachgeschaltet ist.

13. Verfahren zum Betrieb eines Klimatisierungssystems, insbesondere zur Klimatisierung einer Flugzeugkabine, mit wenigstens zwei Klimaanlagen, die einlassseitig jeweils mit einer Versorgungsleitung und auslassseitig mit einer zu klimatisierenden Kabine oder einer Mischkammer in Verbindung stehen, wobei die einlassseitige Versorgungsleitung zum Zwecke der Durchsatzregelung jeweils wenigstens ein Durchsatzregelventil (FCV) aufweist, wobei stromabwärts der Durchsatzregelventile (FCV) wenigstens eine Verbindungsleitung vorgesehen ist, die die einlassseitigen Versorgungsleitungen oder die Klimaanlagen druckluftseitig miteinander verbindet und die mit einem Ventil (PXV) versehen ist, mittels dessen in Abhängigkeit von der Ventilstellung die Verbindungsleitung geöffnet oder abgesperrt werden kann, und wobei das Ventil (PXV) im Normalbetrieb des Klimatisierungssystems geschlossen und bei Ausfall eines Durchsatzregelventils (FCV) geöffnet ist.

14. Verfahren nach Anspruch 13, zum Betrieb eines Klimatisierungssystems nach einem der Ansprüche 1 bis 12.

## Claims

1. Air-conditioning system, in particular for the air-conditioning of an aircraft cabin, with at least two air-conditioning plants which are in each case connected on the inlet side to a supply line and on the outlet side to a cabin to be air-conditioned or to a mixing chamber, the inlet-side supply line having in each case at least one throughput-regulating valve (FCV) for the purpose of throughput control, and there being provided at least one connecting line which connects the inlet-side supply lines or the air-conditioning plants to one another on the compressed-air side and which is provided with a valve (PXV), by means of which the connecting line can be opened or shut off as a function of the valve position, **characterized in that** the connecting line is arranged downstream of the throughput-regulating valves (FCV) and upstream of the first heat exchangers (PHX), on the compressed-air side, of the air-conditioning plants.

2. Air-conditioning system according to Claim 1,
**characterized in that** the valve (PXV) is designed as an open/shut valve.

3. Air-conditioning system according to Claim 1,
**characterized in that** the valve (PXV) is designed as a regulating valve.

4. Air-conditioning system according to one of the preceding claims, **characterized in that** the valve (PXV) and, at least partially, the connecting line leading to the valve (PXV) are integrated structurally into the first heat exchangers (PHX), on the compressed-air side, of the air-conditioning plants.

5. Air-conditioning system according to one of the preceding claims, **characterized in that** the air-conditioning plants are designed in such a way that air or another medium can flow through them.

6. Air-conditioning system according to one of the preceding claims, **characterized in that** each of the air-conditioning plants has one or more shaft devices (ACM) arranged in parallel or in series.

7. Air-conditioning system according to Claim 6, **characterized in that** the shaft devices (ACM) are of any desired design, for example as 3-wheel machines or 4-wheel machines.

8. Air-conditioning system according to Claim 6 or 7, **characterized in that** the shaft devices (ACM) are designed as motorized shaft devices.

9. Air-conditioning system according to one of the preceding claims, **characterized in that** each of the air-conditioning plants has a first heat exchanger (PHX), on the compressed-air side, which is followed by a compressor (C), and a second heat exchanger (SHX), on the compressed-air side, which follows the compressor (C).

10. Air-conditioning system according to Claim 9, **characterized in that** each of the air-conditioning plants has a dehumidification system which follows the second heat exchanger (SHX) on the compressed-air side and which precedes a turbine (T).

11. Air-conditioning system according to Claim 10, **characterized in that** the dehumidification system consists, as components, of a reheater (REH), condenser (CON) and water separator (WE).

12. Air-conditioning system according to one of Claims 9 to 11, **characterized in that** the first heat exchanger (PHX), on the compressed-air side, follows on the ramair side the second heat exchanger (SHX) on the compressed-air side.

13. Method for operating an air-conditioning system, particularly for the air-conditioning of an aircraft cabin, with at least two air-conditioning plants which are in each case connected on the inlet side to a supply line and on the outlet side to a cabin to be air-conditioned or to a mixing chamber, the inlet-side supply line in each case having at least one throughput-regulating valve (FCV) for the purpose of throughput control, there being provided downstream of the throughput-regulating valves (FCV) at least one connecting line which connects the inlet-side supply lines or the air-conditioning plants to one another on the compressed-air side and which is provided with a valve (PXV), by means of which the connecting line can be opened or shut off as a function of the valve position, and the valve (PXV) being closed during the normal operation of the air-conditioning system and being opened in the event of the failure of a throughput-regulating valve (FCV).

14. Method according to Claim 13 for operating an air-conditioning system according to one of Claims 1 to 12.

## Revendications

1. Système de climatisation, en particulier pour la climatisation d'une cabine d'avion, avec au moins deux installations de climatisation, qui sont reliées, côté admission, respectivement à une conduite d'alimentation et, côté évacuation, à une cabine à climatiser ou une chambre de mélange, où la conduite d'alimentation côté admission présente dans le but du réglage du débit à chaque fois au moins une vanne de réglage de débit (FCV), et au moins une conduite de liaison est prévue qui relie les conduites d'alimentation côté admission ou les installations de climatisation au côté de l'air comprimé et qui est munie d'une vanne (PXV) au moyen de laquelle, en fonction de la position de la vanne, la conduite de liaison peut être ouverte ou fermée,
**caractérisé en ce que** la conduite de liaison est disposée en aval des vannes de réglage de débit (FCV) et en amont des premiers échangeurs de chaleur (PHX) côté air comprimé des installations de climatisation.

2. Système de climatisation selon la revendication 1, **caractérisé en ce que** la vanne (PXV) est réalisée comme vanne passante/non passante.

3. Système de climatisation selon la revendication 1, **caractérisé en ce que** la vanne (PXV) est réalisée comme vanne de régulation.

4. Système de climatisation selon l'une des revendications précédentes, **caractérisé en ce que** la vanne (PXV) et au moins partiellement la conduite de liaison menant à la vanne (PXV) sont intégrées, du point de vue de la technique de construction, dans les premiers échangeurs de chaleur (PHX) côté air comprimé des installations de climatisation.

5. Système de climatisation selon l'une des revendications précédentes, **caractérisé en ce que** les installations de climatisation sont réalisées de façon que l'air ou un autre milieu puisse s'écouler à travers celles-ci.

6. Système de climatisation selon l'une des revendications précédentes, **caractérisé en ce que** chacune des installations de climatisation présente une ou plusieurs installations d'ondes (ACM) montées en parallèle ou en série.

7. Système de climatisation selon la revendication 6, **caractérisé en ce que** les installations d'ondes (ACM) sont réalisées sélectivement, par exemple sous forme de machines à trois roues ou machines à quatre roues.

8. Système de climatisation selon la revendication 6 ou 7, **caractérisé en ce que** les installations d'ondes (ACM) sont réalisées comme installations d'ondes motorisées.

9. Système de climatisation selon l'une des revendications précédentes, **caractérisé en ce que** chacune des installations de climatisation présente un premier échangeur de chaleur (PHX), côté air comprimé, en aval duquel est monté un compresseur (C), ainsi qu'un deuxième échangeur de chaleur (SHX) côté air comprimé, en aval duquel est monté un compresseur (C).

10. Système de climatisation selon la revendication 9, **caractérisé en ce que** chacune des installations de climatisation présente un système de déshumidification qui, côté air comprimé, est disposé en aval du deuxième échangeur de chaleur (SHX) et est monté en amont d'une turbine (T).

11. Système de climatisation selon la revendication 10, **caractérisé en ce que** le système de déshumidification est constitué des composants réchauffeur (REH), condenseur (CON) et séparateur d'eau (WE).

12. Système de climatisation selon l'une des revendications 9 à 11, **caractérisé en ce que** le premier échangeur de chaleur (PHX) côté air comprimé est disposé en aval, côté air de refoulement, du deuxième échangeur de chaleur (SHX), côté air comprimé.

13. Procédé de fonctionnement d'un système de climatisation, en particulier pour la climatisation d'une cabine d'avion, avec au moins deux installations de climatisation, qui, côté admission, sont reliées chacune à une conduite d'alimentation et, côté évacuation, à une cabine à climatiser ou une chambre de mélange, où la conduite d'alimentation côté admission, dans le but du réglage du débit, présente respectivement au moins une vanne de réglage de débit (FCV), où est prévu en aval des vannes de réglage de débit (FCV) au moins une conduite de liaison qui relie entre elles les conduites d'alimentation côté admission ou les installations de climatisation côté air comprimé et qui est munie d'une vanne (PXV) au moyen de laquelle, en fonction de la position de la vanne, la conduite de liaison peut être ouverte ou fermée, et où la vanne (PXV), en fonctionnement normal du système de climatisation, est fermée et, en cas de défaillance d'une vanne de réglage de débit (FCV), est ouverte.

14. Procédé selon la revendication 13, pour le fonctionnement d'un système de climatisation selon l'une des revendications 1 à 12.
